# EUROPEAN PATENT APPLICATION

(11) **EP 0 801 971 A1**
(43) Date of publication of application: **22.10.1997**
(21) Application number: 96932837.6
(22) Date of filing: 07.10.1996
(51) Int. Cl.: B01D 53/82, B01D 53/68, B09B 3/00

(54) **WASTE GAS AND DUST TREATMENT METHOD**

(30) Priority: 06.10.1995 JP 259652/95; 06.10.1995 JP 259653/95; 06.10.1995 JP 260489/95; 06.10.1995 JP 260490/95; 18.10.1995 JP 269928/95; 18.10.1995 JP 269929/95
(71) Applicant: KANEKA CORPORATION, Osaka-shi, Osaka 530 (JP)
(72) Inventor: UEKITA, Masakazu, Settsu-shi Osaka 566 (JP); KUROMATSU, Hidekazu, Settsu-shi Osaka 566 (JP); UESHIMA, Kenji, Settsu-shi Osaka 566 (JP); NOMURA, Takuji, Settsu-shi Osaka 566 (JP); IWATA, Motoyoshi, Settsu-shi Osaka 566 (JP)
(74) Representative: VOSSIUS & PARTNER
(86) International application number: JP9602915
(87) International publication number: WO9712662

(57) **Abstract**

The aim of the present invention is to propose a simple procedure which make it possible to seal off surely a various kind of hazardous metals contained in a final waste generated from an incineration of wastes and to stabilize hazardous metals etc. not to leach out again. In a waste gas disposal machine attached to a waste incineration equipment, an acidic gas contained in waste gas generated at time of a waste incineration such as hydrogen chloride or SOx can be effectively captured by blowing into a waste gas generated at time of a waste incineration a high reactive neutralizing agent such as either water glass, calcium hydroxide or powdery calcium silicate hydrate of above 20 m²/g or more preferably above 30m²/g specific surface area according to the present invention. And further, according to the present invention, it is possible to stabilize hazardous metals contained in an ash by either blowing into this waste gas a stabilizing agent or by adding a stabilizing agent for hazardous metals to an ash collected from waste gas and kneading the mixture. The present invention is effective not only for disposal of waste gas from an industrial or a municipal waste incineration furnace but also for stabilizing disposal for hazardous metals contained in an ash from EP ash or a bag ash generated from this waste gas, and an ash collected from waste gas disposed by blowing a neutralizing agent of an acidic gas is easy to be disposed after being captured.

## Description

The present invention relates not only to a disposal method for an acidic gases such as hydrogen chloride or sulfur oxides ( hereafter described SOx ) which are generated in an incineration of a waste or for waste gases which contains hazardous heavy metals but also relates to a stabilizing method of hazardous heavy metals which are generated from waste gases and are contained in ashes collected by dust chambers . And the present invention especially relates to an effective stabilizing method for hazardous heavy metals in dust such as Pb, which are difficult to be prevented to leach out.

### BACKGROUND OF THE INVENTION

The prevailing method for treatment of industrial waste containing hazardous metals consists of mixing it with cement and kneading the mixture with water , followed by curing and solidification so that hazardous metals are stabilized to prevent their leaching. However, a method of simply solidifying of a waste with cement involves several problems and may be associated with secondary pollution, unless its application limited.

Especially, the ash collected by an electrostatic precipitator or bag filter at incineration firms contains hazardous heavy metals such as lead therein in high concentration and disposals with cement according to the prior art of technology cannot completely prevent leaching of hazardous heavy metals. And at present time, it is common practice to dump such a waste without fully stabilizing hazardous heavy metals, and such dumping is presenting problems associated with a secondary pollution after disposal treatments.

It has become apparent inside and outside the country that it is difficult to stabilize waste containing hazardous heavy metals so as to prevent their leaching by simple solidification with cement. This has stimulated the development of a new waste disposal method which permits safe dumping on land and at sea without the possibility of heavy metals leaching out to cause secondary pollution.

For solving such a problem, in Unexamined Japanese Patent(JP-A-07-185499(1995)), the present inventors have proposed a waste disposal agent and a waste disposal method where a waste disposal agent of a combination of a family of cement and reducing metals or a waste disposal agent of a combination of a family of cement, reducing metals and aluminum sulfate or powders of aluminum silicate and etc. are used. In Examined Japanese Patent (JP-B- 04-61710(1992)), a waste disposal method has been disclosed where a source of water soluble phosphates are contained.

A representative incineration instrument for a general waste is equipped with an incineration furnace, a heat exchanger or a water spray nozzle which is aimed to cool a waste gas, a blowing machine ( blowing into an inductive pipe for waste gases) for calcium hydroxide which is aimed to neutralize acidic gases such as hydrogen chloride and dust chambers. Further, sometimes, an instrument or equipment which is aimed to remove hazardous components such as dioxins, Sox, nitrous oxides (hereafter described Nox) and likes, is attached. The ashes collected by dust chamber contain dust, reactants resulted from reaction between calcium hydroxide and acidic gases such as hydrogen chloride, calcium hydroxide which does not react and hazardous metals of low melting temperature. After these ashes are mixed and kneaded with stabilizing agents for hazardous metals, these mixtures are disposed in a landfill as a final waste.

However, in ashes generated at time of an incineration of waste as mentioned before, there are often ashes where hazardous metals such as Pb can not be substantially prevented to leach out by the prior art of technology. Or even if it is possible to stabilize, there are such problems not appropriate to a public benefits as a cost becomes quite high since a large amount of an expensive stabilizing agents must be used or a supplement kneading machine is required for mixing and kneading stabilizing agents for hazardous metals with ashes collected by dust chamber. These problems have stimulated the development of a new waste disposal method. These problems are particularly important in ashes collected by dust chamber which is used in waste gases generated in an incineration of a above mentioned general waste.

The purpose of this invention is to propose a disposal method which make it possible to seal and stabilize surely the various hazardous metals in ashes not to leach out again, by taking an account of the present status of the disposal method for ashes from a final waste generated at time of a waste incineration.

### DETAILED DESCRIPTION OF THE INVENTION

The present inventors have found that there is a common feature in ashes where hazardous metals such as Pb can not be substantially prevented to leach out by prior arts of technology or where a large amount of stabilizing agents for hazardous metals is required , after making a lot of efforts for solving the problems in prior arts of technology. That is, they have found that ashes difficult being prevented for hazardous metals to leach out contain a lot of an alkaline compounds compared with ashes comparatively easy being prevented for hazardous metals to leach out. An alkaline compound which is contained in many ashes is guessed to come from calcium hydroxide which does not be used fully in a waste gas disposal equipment attached to an incineration furnace in which calcium hydroxide is usually blew in order to neutralize acidic gases such as hydrogen chloride. Therefore the present inventors have obtained an idea that it is possible to prevent for hazardous metals to leach out, if an alkaline compound which is contained in ashes of waste gases collected by dust chamber can be reduced by blowing a more reactive neutralizing agents for acidic gases in stead of calcium hydroxide used in an usual method. By using this idea, they have accomplished this invention.

That is, this invention is comprised from blowing a highly reactive neutralizing agent for acidic gases into a waste gas generating at time of an incineration of waste and kneading ashes generated from this waste gas after water is added if necessary, in a waste gas disposal instrument attached to a waste incineration equipment.

Water glass, calcium hydroxide of a high specific surface area and a powdery hydrate of calcium silicate can be used as a neutralizing agent for acidic gases mentioned above. Water glass mentioned above works not only as neutralizing agent for acidic gases but also as an agent for stabilizing of hazardous metals. The water glass used in this invention can be one for a general purpose, the alkaline component of which can be Na or K. But sodium silicate is preferable from point of an availability on market and price. The composition of sodium silicate can be generally expressed as Na₂O·nSiO₂. In the case of water glass on market, the mole number ,n in the before mentioned formula ,is about in the range of 0.5 ∼4.2, which can be used in this invention. From the point of an ability of preventing for Pb to leach out , the water glass of n of about 3, which is No.3 in JIS regulation, is preferable, while, from the point of an ability of neutralizing an acidic gas in waste gases such as hydrogen chloride, the use of ortho sodium silicate or metha sodium silicate , the mole ratio ,n, of which is in the range of 0.5 ∼2, is preferable. The type of water glass on market is powdery or an aqueous solution, either of which can be used in this invention. The use of an aqueous solution in waste gas disposal process is not only convenient in blowing it into a chimney flue quantitatively but also has a cooling effect of waste gases. PH of an aqueous solution of water glass is generally in the range of 9∼14.6, though it depends on its composition or concentration. When an aqueous solution of water glass is blew into a chimney flue quantitatively, it is preferable that water glass is sprayed as possible as a fine mist. Therefore, the concentration of water glass is needed to be adjusted, though it depends on the sprayer used there . As water glass is diluted more, it becomes easier to be sprayed, but when the concentration of it is too thin, the growth of silicate, which is a reactant between an acidic gas such as hydrogen chloride and water glass, is insufficient. While, in the case that a concentration of water glass is too thick, water glass can not be sprayed as a fine mist. Thus, since an abrupt growth of silicate, which is a reactant between an acidic gas such as hydrogen chloride or SOx and water glass, results, the form of silicate becomes not preferable to stabilize a component of heavy metal. It is possible to add further flocculant, precipitant, chelate agent and reducing agent as a supplementary agent other than the water glass mentioned above. Though a mechanism how water glass can neutralize an acidic gas such as hydrogen chloride in waste gases is not clear, it may be guessed that an alkaline component in water glass may react with a acidic gas such as hydrogen chloride. Further, though a mechanism how water glass can stabilize a hazardous metal is not clear, a gel of silicate, which is produced by a reaction between water glass and an acidic gas such as hydrogen chloride or SOx, may adsorb and stabilize hazardous metal. Therefore, by blowing water glass into a waste gas, it becomes possible not only to capture effectively an acidic gas in a waste gas generated at time of a waste incineration, but also to stabilize hazardous metal by a reactant between water glass and an acidic gas. Thus, hazardous metal containing in an ash generated from a treated waste gas also can be stabilizes.

Preferable calcium hydroxide, which is a component having an ability of neutralizing acidic gases such as hydrogen chloride, SOx, NOx and etc., is one the specific surface area of which is above 20m²/g , more preferable one is above 30m²/g. However , calcium hydroxide the surface area of which is 35∼40m²/g can be produced by a method disclosed , for example, in JP-B-06-8194(1994). In the process producing dried calcium hydroxide by slaking a fine bulky or pulverized lightly burned lime through mixing them violently and uniformly with a slaking liquid composed from water and organic solvent which retards a reaction with water, this method is comprised from the following processes (1) a mixing of lime with a slaking liquid, which is composed from 30∼50 volume parts of water and 50∼70 volume of organic solvent, is done in a mixing vessel below 45°C, (2) next a reacting mixture is transferred to a main reacting vessel, (3) the reacting mixture in the vessel is heated to 50∼ 70°C by heating machine and (4) the final reaction is performed in the second reaction vessel where the ratio of lime to slaking liquid in the before mentioned vessel is selected as the temperature of the before mentioned second reaction vessel can reach to 85 ∼ 110°C. Further, in the degas process, the solvent adsorbed on the finished calcium hydroxide is removed by application of vacuum or/and purge with use of an inactive gas. The use of calcium hydroxide" Tama calc"( produced by OKUTAMA Ltd. Co.) is a definite preferable example from point of an industrial use. In the use of such a calcium hydroxide of a large specific area as this, even an use of a half blowing amount of calcium hydroxide makes it possible to reduce an amount of a discharged acidic gas to about half. When this calcium hydroxide is used, it is possible to use it either in powdery state or in the disperse state in water. Taking an account of a reactivity with an acidic gas such as hydrogen chloride, the use of a dispersion in water is preferable. Further, the amount of calcium hydroxide used must be set appropriately dependent on a concentration of an acidic gas in waste gas, a temperature of waste gas, flux and a final concentration of an acidic gas discharged into an open air. However, since the surface area of this calcium hydroxide is about twice compared with that of a special number calcium hydroxide in JIS regulation( specific surface area is 14.5 m²/g) and its reaction efficiency with an acidic gas such as hydrogen chloride is high, the nearly same concentration of a final discharged acidic gas can be reached with a half amount ( weight parts) of addition of a special number calcium hydroxide in JIS regulation.

On calcium hydroxide hydrate which is used as neutralizing agents for an acidic gas, calcium silicate hydrate having above 20 m²/g specific surface area is preferable. Further, taking an account of a reaction efficiency for an acidic gas such as hydrogen chloride, calcium silicate hydrate having above 30 m²/g specific surface area is more preferable. Further, from an industrial availability, calcium silicate hydrate having 30 m²/g ∼60m²/g specific surface area is preferable. A definite example of such calcium hydroxide hydrate is 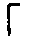 H P : Sunpalfer 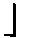 produced by ASAHI CHEM. Ltd. Co.( represented by 5CaO·6SiO₂· 5 H ₂O). The use of this is industrially the most preferable. When used, an use of these dispersions in solvents may be considered, but an use of these dispersion in water is the most preferable by taking an account of a reactivity to an acidic gas such as hydrogen chloride. Further, since these agents are sprayed into a chimney flue, a preferable particle size is below 1000 µ m in order to prevent plugging in a spray tube. Further, in order to use the spray machine for an usual calcium hydroxide without any change, an use of calcium silicate hydrate of 0.45∼0.75 bulk density is preferable. Further, though its mechanism is not clear, a powdery calcium silicate hydrate has not only an ability for neutralizing an acidic gas, but also has an effect of adsorbing and stabilizing hazardous metals such as Pb. An amount used of a powdery calcium silicate hydrate of above 20m²/g specific surface area must be set appropriately depending on a concentration of an acidic gas, a temperature of waste gas, flux and an concentration of an acidic gas discharged into open air. However, since this powdery calcium silicate hydrate has a large specific area compared with a special number calcium hydroxide in JIS regulation( specific surface area is 14.5 m²/g), its reactivity to an acidic gas such as hydrogen chloride is high and it has a nearly same ability to neutralize an acidic gas though an alkaline component contained in an unit weight is less than a special number calcium hydroxide in JIS regulation. As these results, it becomes possible to reduce an amount of a remained alkaline component in an ash collected from waste gas treated with this calcium silicate.

Further, in this invention, an use of stabilizing agents for hazardous metals in addition to neutralizing agents of an acidic gas make it sure to stabilize hazardous metals in ashes.

Next, stabilizing agents used in this invention will be explained. The stabilizing agents, a main component of which have both abilities to neutralize an acidic gas such as hydrogen chloride , SOx, NOx and etc. and to stabilize hazardous metals contained in waste gas, are preferable. As a stabilizing agent for hazardous metals mentioned before, a stabilizing agent, the main component of which is water glass used as a neutralizing agent of an acidic gas mentioned above, can be used. Further, an appropriate addition to water glass a compound, which can produce a insoluble or sparingly soluble calcium compounds by reacting with calcium ion such as sodium carbonate or which make a gel by reacting with water glass such as sulfuric acid, is effective to increase an ability of preventing for Pb to leach out. As stabilizing agents, these, the main component of which is neutralizing agents, inorganic adsorbing agents, chelate agents, phosphate salts, a family of cements and a compound which can produce a insoluble or sparingly soluble compounds by reacting with compounds of hazardous metals such as Pb, can be used.

An example of neutralizing agents is an usual acid such as hydrogen chloride, sulfuric acid, nitric acid, oxalic acid, carboxylic acid, boronic acid and etc., sulfate salts such as aluminum sulfate, amorphous aluminum hydroxide, iron chloride, phosphoric acid and likes. From points of view of price, industrial availability and easy handling in practical use, sulfate salts, aluminum hydroxide, iron chloride and phosphoric acid are preferable. Especially, phosphoric acid is most preferable since phosphoric acid can produce an insoluble compound by reacting with Pb in ash. These neutralizing agents can be used either as an aqueous solution, powder or dispersion in water.

An example of adsorbing agents is a various active white clays, synthetic silica, a processed natural silica, active carbon and likes. A porous aluminum silicate or porous silica is most preferable. A various kind of porous aluminum silicates such as crystalline, amorphous, non-crystal, glassy, synthetic and natural one are known, and any of these can be used in this invention if it is powdery. Further, aluminum silicate is a compound of a silica a parts of silicon atoms of which are replaced by aluminum. A natural aluminum silicate such as a floatstone, fly ash, kaolin, talc, bentonite, active white clay, diatomite, zeolite and like and a synthetic aluminum silicate are known as an example of this compound. Among these, since a synthetic aluminum silicate has a large specific surface area and a high ability of adsorbing of lead, this can stabilize effectively hazardous metals such as Pb. As the specific surface area of an inorganic porous adsorbing agent such as porous silica or aluminum silicate increases, its ability of adsorbing of hazardous metals such as Pb also increases. However, since a volume of a disposal agents also increases as a specific surface area increases, too large specific surface area is not desirable. Therefore, it is desirable that the specific surface area of a porous adsorbing agents used in this invention is in the range between above 200m²/g and less than 700m²/g , especially the range between above 400m²/g and less than 700m²/g is more desirable.

An example of a chelate agent mentioned before is a compound and its salts which has a chelate ligand to hazardous metals in its chemical structure such as -OH, -CSSH, -SH, =NH, -COOH, -NH₂ and likes, and , from point of a preventing ability for Pb to leach out, either dimethyl dithio carbamate salt, diethyl dithio carbamate salt, dibutyl dithio carbamate salt or tannic acid is preferable. A example of an industrially available one is either 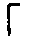 ash clean C-300 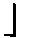 produced by EBARA Corporation, 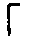 New Eporuver-800 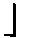 produced by MIYOSHI Oil & FAT Co. Ltd., 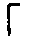 High Gion 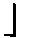 produced by Nippon Soda Co. Ltd., 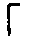 AlsiteL- 101 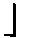 produced by Fuji SASH Co. Ltd., 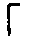 Organite-2050 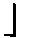 produced by ORGANO Co. Ltd. , 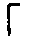 Sumichelate-AC-20 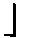 produced by SUMITOMO CHEM. Co. Ltd., 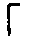 Orithol 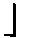 produced by Oriental Tech. Co. Ltd or 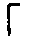 Hibaiblock 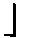 produced by NAIGAI CHEM. Co. Ltd.. These chelate agents can be used either as an aqueous solution, powder or a dispersion in water.

An example of phosphate salts mentioned before is either ortho phosphate salts, ortho hydrogen phosphate salts, condensed phosphate salts or condensed hydrogen phosphate salts, and, further, either sodium salts, potassium salts, magnesium salts or calcium salts can be exemplified, and sodium salts, which is soluble in water, is preferable since a water soluble salt is preferable. As an industrial available one, 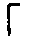 ashnite R series 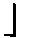 produced by KURITA Water Industries, Ltd and likes can be exemplified.

An example of a cement family is either a baked plaster, portland cement, quick and strong cement, jet cement or aluminum cement. An individual or a mixture of more than two can be usable in this invention.

An example of a compound, which can produce a sparingly soluble or insoluble compounds by reacting with hazardous metals such as Pb, is either sulfides such as sodium sulfide, carbonate salts, oxalic salts, sulfate salts or chromic acid salts.

As described above, stabilizing agents of hazardous metals used in this invention is a compound or a mixture, the main components of which are more than one compound selected from either water glass, neutralizing agents, inorganic adsorbing agents, chelate agents, cement family or compounds which can produce sparingly soluble or insoluble compounds by reacting with hazardous metals such as Pb, but they can also contain a various kind of additives such as a reducing agent of hazardous metals other than an inevitable impurity.

Stabilizing agents of hazardous metals described above can be either blew into waste gas with a neutralizing agents for an acidic gas or can be added at kneading time of ashes. When stabilizing agents of hazardous metals is blew into waste gas with a neutralizing agents for an acidic gas, not only an acidic gas in waste gas such as hydrogen chloride can be neutralized but also it is possible to prevent for hazardous metals to leach out from ash collected by dust chamber for waste gas.

When stabilizing agents of hazardous metals are comprised from more than two components, each component can be used as a mixture prepared beforehand or each component can be sprayed separately into a chimney flue attached to an incineration equipment or each component can be added separately at kneading time of an ash. When there are possibilities that more than two components selected may hamper a stabilizing effect of hazardous metals or may generate hazardous gases by reacting with each other, it is preferable to spray separately or to add separately. In this case, it is possible to spray or to add a mixture which is prepared immediately before spraying or adding by joining each component by extruding them from separate tanks. A spraying amount of stabilizing agents of hazardous metals used in this invention must be set appropriately depending on the nature of an ash applied and an aimed leaching amount of hazardous metals, but it is usually 1 ∼ 3 5 weight parts to 100 weight parts of an ash.

Further, a neutralizing agents and stabilizing agents can be used either as a mixture prepared beforehand or can be mixed when used. Thus, they can be sprayed into a chimney flue after mixed beforehand or they can be sprayed separately. When there are possibilities that a stabilizing effect of hazardous metals may be hampered or a neutralizing effect may hampered or hazardous gases may be generated by reaction between stabilizing agents and neutralizing agents, it is preferable to spray separately or to add separately. Further, in such a case, it is possible to spray or to add a mixture which is prepared immediately before spraying or adding by joining stabilizing agents and neutralizing agents by extruding them from separate tanks. The used ratio of both components is different depending on disposing waste gas or disposing ash and can not determined generally , but the mixture in the range of above 10 weight parts and less than 100 weight parts of a stabilizing agent of hazardous metals to 100 weight parts of calcium hydroxide orx calcium silicate hydrate, which is a neutralizing agent for an acidic gas such as hydrogen chloride, SOx, NOx and likes, is sufficient. Generally the mixture in the range of above 10 weight parts and less than 50 weight parts is sufficient.

The process of blowing a neutralizing agents for an acidic gas and stabilizing agents will be explained. There are a various types of an incineration furnace and it is difficult to specialize the place of blowing , but it is desirable to blow neutralizing agents for an acidic gas and stabilizing agents between a boiler and a dust chamber. In this invention, either a powder or a liquid of disposal agents can be blew in. When a liquid is used, it is desirable from points of the purpose of setting the quenching reaction tower and from point that this quenching reaction tower can serve also as the equipment for blowing a liquid that a liquid of a disposal agent is blew in at the quenching reaction tower where, at present time, only either a cooling water or a slurry of calcium hydroxide is blew in.

For a disposal of ashes which is generated from a waste gases treated by neutralizing agents for an acidic gas or by stabilizing agents for hazardous metals and which is collected by dust chamber, a kneading machine for general purpose, which is classified as a wheel type, ball type and blade type, can be used without any limitation. Especially, a kneading machine such as a kneading machine with a humidifier, twin-screw kneading machine or vibro-mixer is preferable. An ash stored in hopper after being collected by dust chamber is transported to a kneading machine and is kneaded after an appropriate water is added if necessary. If desired, it can be molded in a desired shape. In this case, if disposal agents for waste gas contain a stabilizing agents for hazardous metals, a mixing of stabilizing agents for hazardous metals with ashes becomes unnecessary . This is preferable because a hopper for a disposal agent or a quantitative feeder becomes unnecessary. Further, since a mixing of a disposal agent and waste gas is performed by blowing a disposal agent into waste gas, a mixing and kneading of a disposal agent and waste gas is performed sufficiently.

Further, in the disposal process by this invention, the other stabilizing agents for hazardous metals other than the stabilizing agents for hazardous metals mentioned above can be added at time of kneading of ashes. That is, if a sufficient stabilization can not be accomplished by blowing neutralizing agents for an acidic gas or stabilizing agents for hazardous metals into waste gases, the other chemical stabilizing agents can be used which can stabilize hazardous metals. In this case, ashes stored in hopper after being collected by a dust chamber are preferably transported to a kneader quantitatively and are added with the chemical stabilizing agent for hazardous metals mentioned before. In this case, the general kneader exemplified above can be used without any limitation. Of course, a kneaded disposed waste can be molded in a desired form if desired. A chemical stabilizing agent used in this invention is either aluminum sulfate, aluminum phosphate, solid acid or a chemical agents which is added a consolidation-proof agent such as an active clay to these chemicals mentioned above, which are described in JP-A-7-185499(1995). A example of a solid acid mentioned above is a natural clay mineral such as an acidic white clay, slurred earth, montmorillonite, bentonite, kaolin, clarite, phlorizin and likes, the specific surface area of which is in the range between above 150m²/g and less than 500m²/g is preferable. A further example of a solid acid mentioned above is either silica-gel and /or alumina which is adsorbed with sulfuric acid, phosphoric acid and/or malonic acid, a solid acid which is prepared by adsorbing and heating a phosphoric acid on a carrier such as diatom earth, silica-gel, quartz sand and/or titanic oxide, polyanion compounds or a cation exchange resins. Further, a example of a consolidation-proof agent is an active white clay, an active alumina, calcium stearate, silica-gel and likes. A preferable example of a consolidation-proof agent is either potassium, sodium and ammonium salts of phosphate acid, carbonate, sulfuric acid and carboxylic acid such as sodium hydroxide, potassium carbonate, sodium carbonate, tripotassium phosphate, pentasodium triphosphate( sodium tripolyphosphate), hexasodium tetraphosphate( tetrapolyphosphate), sodium hexamethaphosphate, ammonium sulfate and , potassium oxalate or potassium 1-hydroxyethane-1,1-diphophonate, sodium 1-hydroxyethane-1,1-diphophonate, potassium etylenediamintetraacetate, sodium etylenediamintetraacetate and sodium dimethyldithiocarbamate. Another preferable example of a consolidation-proof agent is a agent which comprised from the consolidation-proof agent and an additive such as gluconic salts, tartaric salts, benzoic salts, lignin sulfuric salts, polysaccharide and salts composed from univalent cation and hydroxide ion. Further, 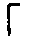 Ashreat 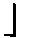 produced by PSL( POLISH SCIENCE LAB.), 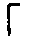 ALSITE 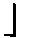 produced by FUJI SASH Ltd. Co., and 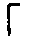 STX 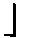 produced by CHICHIBUONODA Ltd. Co. , which are on market as a powdery agent, can be used. Also, either a polymer chelate agent such as 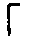 New Eepoluva 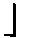 produced by MIYOSHI OIL & FATS Ltd. Co. and 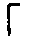 High Dion 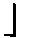 produced by NIPPON SOAD Ltd. Co. or low molecular weight chelate agent from a family of dialkyldithiocarbamate such as 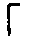 Sumi chelate 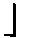 produced by SUMITOMO CHEM. Ltd. Co., 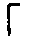 Orithol 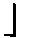 produced by Oriental Tech. Co. Ltd , 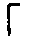 UML 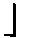 produced by YUNITIKA Ltd. Co. can be used. Further, 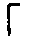 Ashnite R series 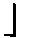 produced by KURITA Water Industries, Ltd can be used.

Though the mechanism how the disposal process by this invention stabilizes hazardous metals such as Pb in ashes is not clear, it is possible to guess the following mechanism. That is, calcium hydroxide has been used in a prior art in order to neutralize an acidic gas in waste gas discharged at time of an incineration of waste. However, since Pb compounds generally tends to be dissolved easily in an alkaline condition, the remained calcium is a large factor accelerating for Pb to leach out. Calcium hydroxide mentioned before is used in order to neutralize an acidic gas such as hydrogen chloride in the case of ash generated at time of an incineration of waste. Thus, it becomes possible to prevent effectively for hazardous metals in ash collected from waste gas by a dust chamber, to leach out by synergy effects between a reducing action of an alkaline component and an increased stabilizing ability for hazardous metals, which is resulted from use of a neutralizing agent of a high reaction efficiency as used in this invention.

### Best Mode for Carrying Out the Invention

The invention will be described in more detail with reference to the following examples, which are not intended to restrict the scope of the invention.

### Example 1

In an incineration furnace under the operation condition that the concentration of hydrogen chloride at the inlet of the quenching reaction tower for waste gas was 800 ppm ( O₂: 12% reduced to dry gas), the volume of waste gas 1000NM³- wet/hr and dust about 4g/Nm³-dry gas, 5kg /hr of 30% aqueous solution of sodium ortho silicate as a disposal agent for waste gas was blew into the quenching reaction tower mentioned before. As result of blowing of this agent, the concentration of hydrogen chloride at the outlet of bag filter was reduced to 40 ppm( O₂: 12% reduced to dry gas). Further, after 30 g water was added to 50 g ash from waste gas collected by bag filter and the mixture was kneaded, it was cured and solidified for 7 days at 20°C. Afterwards, this kneaded mixture was tested with a leaching test method described in Notification No.13 of the Environment Agency. The amount of Pb leaching was 0.18 ppm. This result was well below the regulated value for Pb 0.3 ppm in Japan and a further stabilization was needless.

Here, Notification No.13 of the Environment Agency is formally named as 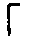 testing method for metals and etc. containing in an industrial waste 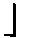 , and an outline of it is as follow.
1. Pulverizing of a disposal
   In an industrial waste other than cinders, sludge and ash, a sample is assumed to be taken as it is if its particle size is below 5mm. If a particle size is larger than 5mm, a sample is taken as it is, and after it is pulverized , a particle size is made in the range of above 0.5mm and less than 5mm by using 32 th and 4 th standard sieves.
2. A liquid sample
   A sample and solvent are mixed as the volume ratio become 10% and the volume of the mixture becomes above 500ml.
3. Leaching
   Agitate the sample continuously for 6 hours by using agitator( which is adjusted as a vibration cycle is 200cycles /min. , the amplitude is between above 4cmm and below 5cm) at room temperature (about 20°C) and a normal pressure ( about one atom).
4. Filtration
   A solution after filtration of a sample liquid obtained by procedures of a leaching of metals and etc. with use of a glass fiber filter paper of 1 µ m pour size .

The leaching tests described in examples and comparative examples described here were done according to the method mentioned above. That is, after the waste was pulverized, a sample was prepared from a recovered particles the size of which was between above 0.5mm and below 5mm, and a purified water was added to this sample as the ratio of solid to liquid becomes 1:10, and this mixture was agitated continuously for 6 hours by using agitator( which is adjusted as a vibration cycle is 200cycles /min. , the amplitude is between above 4cm and below 5cm) at room temperature and a normal pressure, and the sample liquid was filtered with use of a glass fiber filter paper of 1 µ m pour size and the concentration of heavy metals in filtrate was measured.

### Example 2

In an incineration furnace under the operation condition that the concentration of hydrogen chloride at the inlet of the quenching reaction tower for waste gas was 800 ppm ( O₂: 12% reduced to dry gas), the volume of waste gas 1000Nm³- wet/hr and dust about 4g/Nm³-dry gas, both 2.07 kg/hr of " Tama calc"( specific surface area is 38m²/g) produced by OKUTAMA Ltd. Co. , which was equivalent mole of the concentration of hydrogen chloride , and 2.07kg/hr of a synthetic silicate produced by SHIONOGI Pharmacy were blew in at the place just before a entrance of bag filter. As a result of blowing, the concentration of hydrogen chloride was reduced to 60 ppm ( O₂: 12 % reduced to dry gas ) at the outlet of bag filter. Further, after 30 g water was added to 50 g ash from waste gas collected by bag filter and the mixture was kneaded, it was cured and solidified for 7 days at 20°C( room temperature). Afterwards, this kneaded mixture was tested with a leaching test method. The amount of Pb leaching was 0.1 ppm. This result was well below the regulated value for Pb 0.3 ppm in Japan and a further stabilization was needless.

### Comparative example 1

In an incineration furnace under the same operation condition that the concentration of hydrogen chloride at the inlet of the quenching reaction tower for waste gas was 800 ppm ( O₂: 12% reduced to dry gas), the volume of waste gas 1000NM³- wet/hr and dust about 4g/Nm³-dry gas, 4.14 kg/hr of a special number calcium hydroxide in JIS regulation ( specific surface area is 14.5m²/g), which was two equivalent mole of the concentration of hydrogen chloride was blew in at the place just before a entrance of bag filter. As a result of blowing, the concentration of hydrogen chloride was reduced to 60 ppm ( O₂: 12 % reduced to dry gas ) at the outlet of bag filter. Further, after 30 g water was added to 50 g ash from waste gas collected by bag filter and the mixture was kneaded, it was cured and solidified for 7 days at 20°C( room temperature). Afterwards, this kneaded mixture was tested with a leaching test method. The amount of Pb leaching was 75 ppm, which showed that a further disposal by a stabilizing agent was needed.

### Comparative example 2

In an incineration firm of a general waste, 796kg/day of a special number calcium hydroxide in JIS regulation was blew in the chimney flue in order to neutralize a waste gas. In this case, the average concentration of hydrogen chloride at the place just before the inlet of blowing calcium hydroxide was 800ppm,and the concentration of hydrogen chloride at the place behind the inlet was 37 ppm. The average generating amount of ash from waste gas collected by bag filter was 2100kg/day. The stabilizing agents for hazardous metals the amount of which were given in table 1 were added to this ash, and this mixture were kneaded. Further, after an appropriate water was added to this and the mixture was further kneaded and left for 7 days, a leaching test of Pb was done. The results were given in Table 1.

**Table 1**

| Stabilizing agents for hazardous metals | | | leaching amount from ash(ppm) |
|---|---|---|---|
| Kind | added amount (kg/day) | amount to ash (%) | |
| portland cement | 315 | 15 | 1.3 |
| amorphous Al hydroxide | 315 | 15 | 45 |
| fine powder of aluminum silicate(specific surface area 450m2/g) | 420 | 20 | 0.6 |
| sodium dithio carbamate (reagent grade) | 105 | 5 | 1.9 |
| aqueous solution of JIS No.3 sodium silicate | 945 | 45 | 2.5 |
| disodium hydrogenphosphate | 315 | 15 | 9.9 |

### Example 3

In an incineration firm of a general waste, both 410kg/day of " Tama calc"( specific surface area is 35∼40m²/g) produced by OKUTAMA Ltd. Co. and the stabilizing agents for hazardous metals the amount of which were given in table 2 were blew in the chimney flue in order to neutralize a waste gas. In this case, the average concentration of hydrogen chloride in waste gas at the place just before the inlet of blowing calcium hydroxide was 820ppm,and the average concentration of hydrogen chloride in the waste gas at the place behind the inlet of calcium hydroxide was 10∼35 ppm. After water was added to this ash and the mixture was kneaded and left for 7 days, a leaching test of Pb was done. The results were given in Table 2

**Table 2**

| Stabilizing agents for hazardous metals | | | leaching amount from ash(ppm) |
|---|---|---|---|
| Kind | added amount (kg/day) | spraying method | |
| portland cement | 320 | spray after mixing Tama calc beforehand | 0.26 |
| amorphous Al hydroxide | 305 | separately spray after Tama calc | <0.1 |
| fine powder of aluminum silicate(specific surface area 450m2/g) | 420 | spray after mixing Tama calc beforehand | <0.1 |
| sodium dithio carbamate ( reagent grade) | 100 | spray after mixing Tama calc beforehand | 0.28 |
| aqueous solution of JIS No.3 sodium silicate (solid content of 38.5%) | 945 | separately spray after Tama calc | 0.15 |
| disodium hydrogenphosphate ( reagent grade) | 300 | separately spray after Tama calc | 0.11 |

From the results given in table 1 and 2, it is seen that the disposal procedure by this invention, where the ash collected from waste gas which was disposed by spraying both calcium hydroxide of high specific surface area and stabilizing agents for hazardous metals was simply disposed by water, is effective to prevent for Pb to leach out with use of a nearly same amount of stabilizing agents for hazardous metals, compared with a prior disposal procedure where the ash collected from waste gas which was disposed by JIS special number calcium hydroxide was disposed by stabilizing agents for hazardous metals. Further, since the concentration of hydrogen chloride in waste gas was made same or below with use of a half amount of JIS special number calcium hydroxide in the case of calcium hydroxide of high specific surface area, a generating amount of waste ash ( the final waste disposed by stabilizing agents for hazardous metals) could be reduced. Thus, the disposal procedure by this invention is effective for prolongation of landfill place.

### Comparative example 3

In an incineration firm of a general waste, 706kg/day of a special number calcium hydroxide in JIS regulation was blew in the chimney flue in order to neutralize a waste gas. In this case, the average concentration of hydrogen chloride at the place just before the inlet of blowing calcium hydroxide was 790ppm,and the average concentration of hydrogen chloride at the place behind the inlet was 42 ppm. The average generating amount of ash from waste gas collected by bag filter was 1900kg/day. The stabilizing agents for hazardous metals the amount of which were given in table 3 were added to this ash, and these mixture were kneaded. Further, after an appropriate water was added to these and the mixtures were further kneaded and left for 7 days at 20°C, leaching tests of Pb were done. The results were given in Table 3.

**Table 3**

| Stabilizing agents for hazardous metals | | | leaching amount from ash(ppm) |
|---|---|---|---|
| Kind | added amount (kg/day) | amount to ash (%) | |
| portland cement | 285 | 15 | 1 |
| amorphous Al hydroxide | 285 | 15 | 50 |
| fine powder of aluminum silicate (specific surface area 450m2/g) | 380 | 20 | 0.6 |
| aqueous solution of JIS No.3 sodium silicate | 855 | 45 | 3 |
| disodium hydrogenphosphate ( reagent grade) | 285 | 15 | 9.5 |

### Example 4

In an incineration firm of a general waste, both 700kg/day of calcium silicate hydrate ( 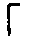 HP:Sunpulfer 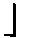 produced by ASAHI CHEM. Ltd. Co. specific surface area is 35m²/g) and the stabilizing agents for hazardous metals the amount of which were given in table 4 were blew in the chimney flue in order to neutralize a waste gas. In this case, the average concentration of hydrogen chloride in the waste gas at the place just before the inlet of blowing calcium silicate hydrate was 810ppm, and the average concentration of hydrogen chloride in the waste gas at the place behind the inlet of calcium silicate hydrate was 28∼35 ppm. After water was added to this ash collected by bag filter and the mixture was kneaded and left for 7 days, a leaching test of Pb was done. The results were given in Table 4.

**Table 4**

| Stabilizing agents for hazardous metals | | | leaching amount from ash(ppm) |
|---|---|---|---|
| Kind | added amount (kg/day) | spraying method | |
| portland cement | 285 | spray after mixing calcium silicate beforehand | 0.28 |
| amorphous Al hydroxide | 285 | separately spray after Ca silicate | <0.1 |
| fine powder of aluminum silicate (specific surface area 450m2/g) | 380 | spray after mixing calcium silicate beforehand | <0.1 |
| aqueous solution of JIS No.3 sodium silicate (solid content of 38.5%) | 855 | separately spray after Ca silicate | 0.1 |
| disodium hydrogenphosphate (reagent grade) | 285 | separately spray after Ca silicate | <o.1 |

From the results given in table 3 and 4, it is seen that the disposal procedure by this invention, where the ash collected from waste gas which was disposed by spraying both powdery calcium silicate hydrate of above 20m²/g specific surface area and stabilizing agents for hazardous metals was simply disposed by water, is effective to prevent for Pb to leach out with use of anearly same amount of stabilizing agents for hazardous metals, compared with a prior disposal procedure where the ash collected from waste gas which was disposed by JIS special number calcium hydroxide was disposed by stabilizing agents for hazardous metals.

### Comparative Examples 4 and 5

In an incineration firm of a general waste, an ash was taken from a waste gas generated from an incineration firm where an incineration furnace and a waste gas disposal equipment were operated under the condition that calcium hydroxide was blew in as the concentration of hydrogen chloride in the open air waste gas became constant . The ash taken was disposed by a various kind of stabilizing agents for hazardous metals. Two kinds of ashes were taken. One was from waste gas disposed by JIS special number calcium hydroxide as calcium hydroxide (comparative example 4 ), and the other was from waste gas disposed by " Tama calc" produced by OKUTAMA Ltd. Co. ( comparative example 5). The stabilizing agents for hazardous metals the amount of which were given in table 5 were added to two kinds of ashes described above, and these mixtures were kneaded. Further, after an appropriate water was added to these and the mixtures were further kneaded and left for 7 days at 20°C, a leaching test of Pb was done. The results were given in Table 5.

**Table 5**

| stabilizing agent for hazardous metals | | amount of Pb leaching from ash | |
|---|---|---|---|
| kind | amount added to ash(weight parts) | comparative example 4 | comparative example 5(note) |
| portland cement | 5 | 78 | 56 |
| | 10 | 12 | 3.1 |
| | 15 | 1.5 | 0.29 |
| amorphous aluminum hydroxide | 10 | 77 | 58 |
| | 15 | 52 | <0.1 |
| | 20 | 23 | <0.1 |
| powder of aluminum silicate (surface area 450m2/g) | 10 | 10 | 11 |
| | 15 | 2.8 | 3.1 |
| | 20 | 0.4 | <0.1 |
| sodium dithio carbamate (reagent grade) | 3 | 10 | 10 |
| | 5 | 1 | <0.1 |
| | 7 | 0.22 | <0.1 |
| aqueous solution of JIS No.3 sodium silicate(reagent grade) | 15 | 21 | 13 |
| | 30 | 9.2 | 2 |
| | 45 | 2.6 | <0.1 |
| disodium hydrogenphosphate (reagent grade) | 5 | 51 | 45 |
| | 10 | 29 | 2.9 |
| | 15 | 9.2 | <0.1 |
| NaHS(reagent grade) | 5 | 36 | 22 |
| | 10 | 1.9 | 0.26 |
| | 15 | 0.3 | <0.1 |
| note : the specific surface area of calcium hydroxide is 35∼40m²/g | | | |

From results given in table 5, it is seen that leaching of Pb is prevented effectively by applying stabilizing agents for hazardous metals to the collected ash from waste gas disposed by using calcium hydroxide of a large specific surface area. That is, it is seen that a leaching Pb amount can be made below the regulated value 0.3 ppm by the fact that an ability of stabilizing agents for hazardous metals can be remarkably displayed through use of a disposal procedure by this invention, even though a substantial leaching Pb amount can not made below the regulated value 0.3 ppm even applying stabilizing agents for hazardous metals to the collected ash from waste gas disposed by a prior disposal method where JIS special number calcium hydroxide is used. Further, it is seen that a leaching Pb amount can be made below 0.3 ppm with use of a less amount of stabilizing agents for hazardous metals in the case of ash disposed by a disposal procedure by this invention, compared with the case of ash disposed by a prior disposal procedure.

### Comparative example 5 and Example 6

In an incineration firm of a general waste, an ash was taken from a waste gas generated from an incineration firm where an incineration furnace and a waste gas disposal equipment were operated under the condition that calcium hydroxide or powdery calcium silicate hydrate was blew in as the concentration of hydrogen chloride in the open air waste gas became constant. The ash taken was disposed by a various kind of stabilizing agents for hazardous metals. Two kinds of ashes were taken. One was from waste gas disposed by JIS special number calcium hydroxide as calcium hydroxide (comparative example 5 ), and the other was from waste gas disposed by 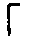 HP:Sunpulfer 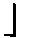 (produced by ASAHI CHEM. Ltd. Co. specific surface area is 35m²/g) (example 6 ). The stabilizing agents for hazardous metals the amount of which were given in table 6 were added to two kinds of ashes described above, and these mixtures were kneaded. Further, after an appropriate water was added to these and the mixtures were further kneaded and left for 7 days at 20°C, leaching tests of Pb were done. The results were given in Table 6.

**Table 6**

| stabilizing agent for hazardous metals | | comparative example 5 | example 6 |
|---|---|---|---|
| kind | amount added to ash(weight parts) | amount Pb leaching from ash disposed by JIS special Ca(OH)2 | amount PB leaching from ash disposed by calcium silicate(note) |
| portland cement | 5 | 78 | 35 |
| | 10 | 12 | 1.1 |
| | 15 | 1.5 | 0.25 |
| amorphous aluminum hydroxide | 10 | 77 | 13 |
| | 15 | 52 | <0.1 |
| | 20 | 23 | <0.1 |
| powder of aluminum silicate (surface area 450m2/g) | 10 | 10 | 3.6 |
| | 15 | 2.8 | 0.2 |
| | 20 | 0.4 | <0.1 |
| sodium dithio carbamate (reagent grade) | 3 | 10 | 9.7 |
| | 5 | 1 | <0.1 |
| | 7 | 0.22 | <0.1 |
| aqueous solution of JIS No.3 sodium silicate(reagent grade) | 15 | 21 | 5.3 |
| | 30 | 9.2 | 0.2 |
| | 45 | 2.6 | <0.1 |
| disodium hydrogenphosphate (reagent grade) | 5 | 51 | 22 |
| | 10 | 29 | 2.5 |
| | 15 | 9.2 | <0.1 |
| NaHS(reagent grade) | 5 | 36 | 24 |
| | 10 | 1.9 | 0.2 |
| | 15 | 0.3 | <0.1 |
| note: 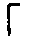 HP:Sunpulfer 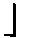 (produced by ASAHI CHEM. Ltd. Co. specific surface area is 35m²/g) | | | |

From results given in table 6, it is seen that leaching of Pb is prevented effectively by applying stabilizing agents for hazardous metals to the collected ash from waste gas disposed by using powdery calcium silicate hydrate of above 20m²/g specific surface area. That is, it is seen that a leaching Pb amount can be made below 0.3 ppm by the fact that an ability of stabilizing agents for hazardous metals can be remarkably displayed through use of a disposal procedure by this invention, even though a substantial leaching Pb amount can not made below the regulated value 0.3 ppm even applying stabilizing agents for hazardous metals to the collected ash from waste gas disposed by a prior disposal method where JIS special number calcium hydroxide is used. Further, it is seen that a leaching Pb amount can be made below 0.3 ppm with use of a less amount of stabilizing agents for hazardous metals in the case of ash disposed by a disposal procedure by this invention, compared with the case of ash disposed by a prior disposal procedure.

### Exploitation in Industry

According to the present invention, not only acidic gases such as hydrogen chloride, SOx and etc. contained in waste gas generated at time of an incineration of wastes can be captured effectively , but also a reduction of an alkaline component in ash becomes possible by blowing into a waste gas a highly reactive neutralizing agents for acidic gases. Further, it becomes possible to stabilize hazardous metals by reactants between stabilizing agents for hazardous metals and acidic gases when stabilizing agents for hazardous metals is blew in waste gas with neutralizing agents for acidic gases. Therefore, the present invention is effective not only for waste gas disposal from an industrial or a municipal waste incineration furnace, but also is effective for a stabilization of hazardous metals contained in ashes such as EP ash or bag ash generated from waste gas. Further, the collected ashes from waste gases, which is disposed by blowing neutralizing agents for acidic gases or stabilizing agents for hazardous metals, is easily disposed after collected.

## Claims

1. A method of disposing a waste gas comprising : blowing into the waste gas at least one kind of neutralizing agent for an acidic gas selected from the group consisting of water glass, calcium hydroxide of above 20m²/g specific surface area and powdery calcium silicate hydrate of above 20m²/g specific surface area, kneading the ash produced therefrom, if necessary, by adding water, and thus preventing the ash from leaching of hazardous metals.

2. The method of claim 1, wherein stabilizing agents for hazardous metals is added at kneading time.

3. The method of Claim 1, wherein stabilizing agents for hazardous metals is blown into the waste gas with neutralizing agent for an acidic gas.

4. The method of Claim 3, wherein a chemical agent which stabilizes hazardous metals is further added.

5. The method of Claim 1, wherein the neutralizing agent for an acidic gas is a water glass.

6. The method of Claim 5, wherein water glass mentioned above is sodium silicate.

7. The method of Claim 6 , wherein the sodium silicate is ortho sodium silicate.

8. The method of Claim 6, wherein the sodium silicate is metha sodium silicate.

9. The method of Claim 6, wherein the sodium silicate is liquid sodium silicate.

10. The method of Claim 1, wherein the neutralizing agent for an acidic gas is calcium hydroxide of above 20m²/g specific surface area.

11. The method of Claim 10, wherein the specific surface area of calcium hydroxide is above 30m²/g specific surface area.

12. The method of Claim 1 , wherein the neutralizing agent for an acidic gas mentioned above is a powdery calcium silicate hydrate of above 20m²/g specific surface area.

13. The method of Claim 2 or 3, wherein the stabilizing agent for hazardous metals is mainly comprised of at least one kind selected from the group consisting of a water glass, a neutralizing agent, an inorganic adsorbing agent, a chelate agent, a phosphate salt, a family of cement and the compound which can produce insoluble or sparingly soluble compounds by reaction with a hazardous metal such as Pb.

14. The method of Claim 13, wherein the stabilizing agent for hazardous metals is mainly comprised of at least one kind selected from the group of neutralizing agents consisting of a sulfate salt, an aluminum hydroxide, an iron chloride and a phosphate salt.

15. The method of Claim 13, wherein the stabilizing agent for hazardous metals is mainly comprised of an inorganic porous adsorbing agent comprising at least one selected from powdery aluminum silicate and powdery silica, and the specific surface area of which is above 200m²/g.

16. The method of Claim 13, wherein the stabilizing agent for hazardous metals is mainly comprised of at least one kind of chelate agent selected from the compounds consisting of a dimethyl dithiocarbamate salt, a diethyl dithiocarbamate salt, a dibuthyl dithiocarbamate salt and a tannic acid.

17. The method of Claim 13, wherein the stabilizing agent for hazardous metals is mainly comprised of a water soluble phosphate salt.

18. The method of Claim 13, wherein the stabilizing agent for hazardous metals is mainly comprised of at least one kind selected from the compounds consisting of a sulfide, a carbonate, an oxalate , a sulfate and a chromate, said compounds being able to produce insoluble or sparingly soluble compounds by reaction with an hazardous metal such as Pb.

19. A waste disposal agent for a waste gas and ash, comprising a neutralizing agent(1) for an acidic gas and the stabilizing agent(2) for hazardous metals, said neutralizing agent(1) being selected from the group consisting of a water glass, a calcium hydroxide of above 20m²/g specific surface area, powdery calcium silicate hydrate of above 20m²/g specific surface area, and a stabilizing agent for hazardous metals, said stabilizing agent(2) at least one being selected from the compounds consisting of a water glass, a neutralizing agent, an inorganic adsorbing agent, a chelate agent, phosphate, a family of cement and the compound which can produce insoluble or sparingly soluble compounds by reaction with a hazardous metal such as Pb.

20. A waste disposal agent for a waste gas and ash as claimed in Claim 19 wherein a neutralizing agent for an acidic gas mentioned before is water glass.

21. A waste disposal agent for a waste gas and ash as claimed in Claim 20 wherein water glass mentioned before is sodium silicate.

22. A waste disposal agent for a waste gas and ash as claimed in Claim 21 wherein sodium silicate mentioned before is ortho sodium silicate.

23. A waste disposal agent for a waste gas and ash as claimed in Claim 21 wherein sodium silicate mentioned before is metha sodium silicate.

24. A waste disposal agent for a waste gas and ash as claimed in Claim 21 wherein sodium silicate mentioned before is liquid sodium silicate.

25. A waste disposal agent for a waste gas and ash as claimed in Claim 19 wherein a neutralizing agent for an acidic gas mentioned before is calcium hydroxide of above 20 m²/g specific surface area.

26. A waste disposal agent for a waste gas and ash as claimed in Claim 25 wherein a specific surface area of calcium hydroxide mentioned before is above 30 m²/g .

27. A waste disposal agent for a waste gas and ash as claimed in Claim 19 wherein a neutralizing agent for an acidic gas mentioned before is powdery calcium silicate hydrate of above 20 m²/g specific surface area.
